(19) Europäisches Patentamt

European Patent Office

Office européen des brevets

(11) Publication number: **0 194 315 B1**

# EUROPEAN PATENT SPECIFICATION
## published in accordance with Art. 158(3) EPC

(45) Date of publication of patent specification: **10.04.91**  (51) Int. Cl.⁵: **G09F 9/35**

(21) Application number: **85904149.3**

(22) Date of filing: **22.08.85**

(86) International application number:
**PCT/JP85/00463**

(87) International publication number:
**WO 86/01624 (13.03.86 86/06)**

(54) **LIQUID CRYSTAL DISPLAY.**

(30) Priority: **23.08.84 JP 175703/84**
      **30.08.84 JP 180935/84**

(43) Date of publication of application:
      **17.09.86 Bulletin 86/38**

(45) Publication of the grant of the patent:
      **10.04.91 Bulletin 91/15**

(84) Designated Contracting States:
      **DE FR GB NL**

(56) References cited:
      **FR-A- 2 534 052**
      **JP-A- 599 636**
      **JP-A- 5 691 275**
      **JP-A- 6 057 371**
      **JP-A-58 172 085**

(73) Proprietor: **SONY CORPORATION**
      **7-35 Kitashinagawa 6-Chome Shinagawa-ku Tokyo 141(JP)**

(72) Inventor: **HAYASHI, Yuji Sony Corporation**
      **7-35 Kitashinagawa 6-chome**
      **Shinagawa-ku Tokyo 141(JP)**
      Inventor: **SONEDA, Mitsuo Sony Corporation**
      **7-35 Kitashinagawa 6-chome**
      **Shinagawa-ku Tokyo 141(JP)**

(74) Representative: **Thomas, Christopher Hugo et al**
      **D Young & Co 10 Staple Inn**
      **London WC1V 7RD(GB)**

## Description

This invention relates to liquid crystal display apparatus used, for example, to display a television picture.

A known such apparatus will first be described with reference to Figures 11 to 15. (A similar apparatus is disclosed in French patent specification FR-A-2 534 052 (& GB-A-2 130 781).)

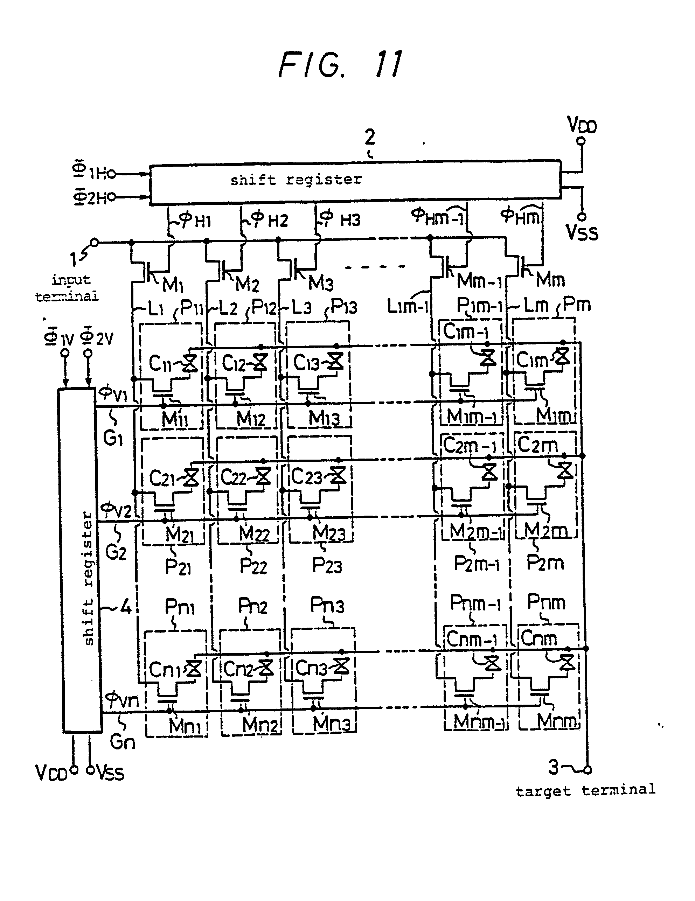

In the apparatus of Figure 11, a television video signal is supplied to an input terminal 1. The signal from the input terminal 1 is supplied through switching elements $M_2$, $M_2$, ... $M_m$, each of which is formed of, for example, an N-channel FET, to lines $L_1$, $L_2$, ... $L_m$ in the vertical (y axis) direction, where m is the number of picture elements in the horizontal (x axis) direction. A shift register 2 having m stages is supplied with clock signals $\Phi_{1H}$ and $\Phi_{2H}$ each having a frequency m times the horizontal frequency. Drive pulse signals $\emptyset_{H1}$, $\emptyset_{H2}$, ...$\emptyset_{Hm}$, which are derived from the respective output terminals of the shift register 2 and sequentially scanned by the clock signals $\Phi_{1H}$ and $\Phi_{2H}$, are supplied to the respective control terminals of the switching elements $M_1$ to $M_m$. To the shift register 2, there are supplied a low potential ($V_{SS}$) and a high potential ($V_{DD}$), and drive pulses of two potentials are generated thereby.

To the respective lines $L_1$ to $L_m$, there are connected one end of switching elements $M_{11}$, $M_{21}$, ... $M_{n1}$, $M_{12}$, $M_{22}$, ... $M_{n2}$, ... $M_{1m}$, $M_{2m}$, ... $M_{nm}$, which are each formed of, for example, an N-channel FET, where n is the number corresponding to the number of horizontal scanning lines. The other ends of the switching elements $M_{11}$ to $M_{nm}$ are respectively connected through liquid crystal cells $C_{11}$, $C_{21}$, ... $C_{nm}$ to a target terminal 3.

A shift register 4 having n stages is supplied with clock signals $\Phi_{1V}$ and $\Phi_{2V}$ each having a horizontal frequency. Drive pulse signals $\emptyset_{V1}$, $\emptyset_{V2}$, ... $\emptyset_{Vn}$, which are derived from the respective output terminals of the shift register 4 and sequentially scanned by the clock signals $\Phi_{1V}$ and $\Phi_{2V}$, are supplied through gate lines $G_1$, $G_2$, ... $G_n$ in the horizontal (x axis) directions to control terminals of the switching elements $M_{11}$ to $M_{nm}$ at every row ($M_{11}$ to $M_{1m}$), ($M_{21}$ to $M_{2m}$), ... ($M_{n1}$ to $M_{nm}$) in the x axis direction, respectively. Also, the shift register 4 is supplied with the potentials $V_{SS}$ and $V_{DD}$ similarly to the shift register 2.

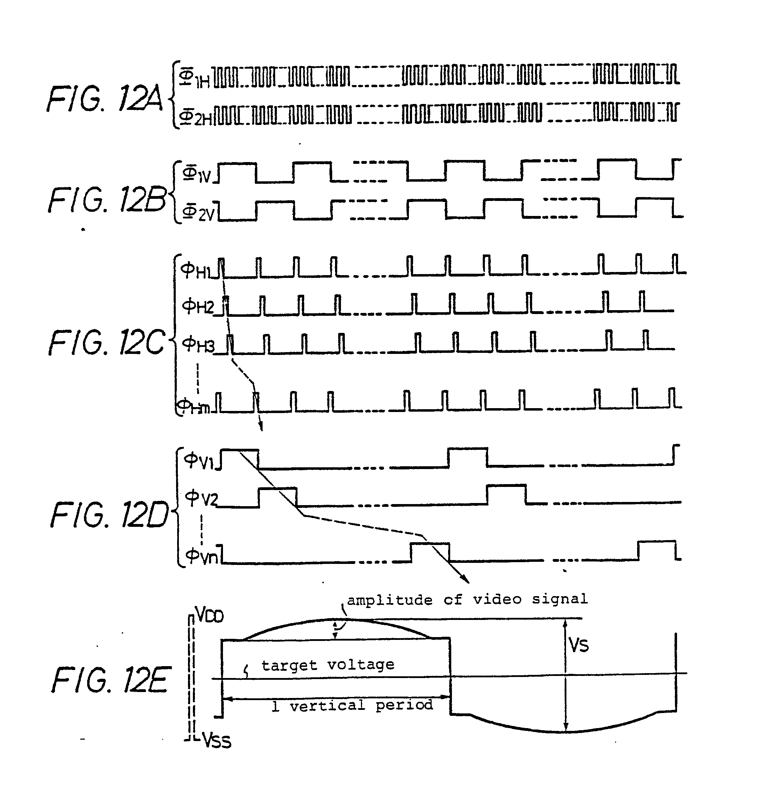

That is, to the shift registers 2 and 4, there are supplied the clock signals $\Phi_{1H}$, $\Phi_{2H}$, $\Phi_{1V}$ and $\Phi_{2V}$ which are shown in Figures 12A and 12B. The shift register 2 generates signals $\emptyset_{H1}$ to $\emptyset_{Hm}$ at every picture element period as shown in Figure 12C, while the shift register 4 generates signals $\emptyset_{V1}$ to $\emptyset_{Vn}$ at every one horizontal period as shown in Figure 12E. To the input terminal 1, there is supplied a signal as shown in Figure 12E.

When the signals $\emptyset_{V1}$ and $\emptyset_{H1}$ are generated, the switching elements $M_1$ and $M_{11}$, to $M_{1m}$ are turned on and thereby a current path from the input terminal 1 through $M_1$, $L_1$, $M_{11}$, $C_{11}$ to the target terminal 3 is formed, through which a potential difference between the signal supplied to the input terminal 1 and the signal at the target terminal 3 is supplied to the liquid crystal cell $C_{11}$. As a result, in the capacitance portion of the cell $C_{11}$, there is sampled and then held a charge corresponding to a potential difference made by the signal of a first picture element. The optical transmissivity of the liquid crystal is changed in response to the amount of this charge. A similar operation is sequentially carried out on the following cells $C_{12}$ to $C_{nm}$. When the signal of the next field is supplied, the charge amounts of the respective cells $C_{11}$ to $C_{nm}$ are rewritten.

Thus, the optical transmissivities of the liquid crystal cells $C_{11}$ to $C_{nm}$ are changed in response to the respective picture elements of the video signal, and this operation is sequentially repeated thereby to display a television picture.

When a display uses liquid crystals, an AC drive system is generally adopted so as to improve the reliability and service life. For example, in the display of a television picture, a signal as shown in Figure 12E, which results from inverting a video signal at every one field or at every one frame, is supplied to the input terminal 1.

In this apparatus, picture element electrodes P of the respective liquid crystal cells C are aligned in the vertical and horizontal directions as shown by broken lines in the figure. On the other hand, when the television picture is displayed, in order to miniaturize the circuit scale, two interlaced pictures are displayed on the same display section. For this reason, this prior apparatus has the problem that the vertical resolution is reduced.

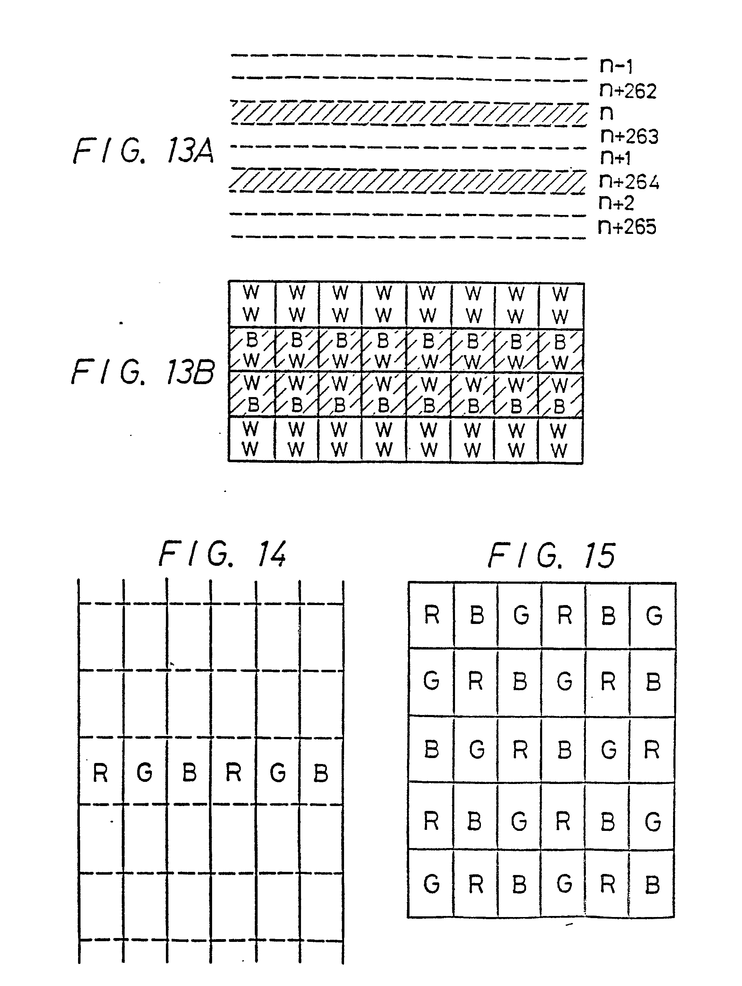

That is, as shown, for example, in Figure 13A, when black is displayed on an n-th scanning line of a first interlaced field and on an n + 264th scanning line of a second interlaced field, and white is displayed on other scanning lines, if they are displayed on the same display section, the black and white pictures are alternately displayed on two adjacent display sections as shown in Figure 13B. One square in the figure represents one liquid crystal cell, a character on the upper side thereof represents the display of black (B) or white (W) on the first field, and a character on the lower side thereof represents the colour displayed on the second field. As will be clear from this figure, when such a picture is displayed, the display is of one grey line of double width, and thus the vertical resolution is lowered.

Moreover, in this apparatus, if colour filters having different colours are disposed at every liquid crystal cell C, and the video signals applied to the input terminal 1 correspond to the colour signals, it is possible to make a colour display. In that case, the picture element electrodes P of the respective liquid crystal cells C are respectively aligned in the vertical and horizontal directions as shown by broken lines in Figure 11.

Accordingly, as a method for disposing the colour filters relative to the aligned picture elements (electrodes P), there is frequently employed a colour filter of a so-called stripe type as shown in Figure 14, where R represents a red colour filter, G a green colour filter and B a blue colour filter. However, in the case of such a stripe-type colour filter, the resolution in the horizontal direction is lowered to 1/3 as compared with a monochromatic type, so that the picture quality is considerably deteriorated.

A colour filter of so-called mosaic type has also been proposed as shown in Figure 15. In this case, although the horizontal resolution is improved as compared with the stripe-type colour filter, as will be clear from the figure, colour filters having the same colour are disposed obliquely, so that slant colour lines like a beat interference appear in the picture, considerably deteriorating the quality.

Japanese patent specification JP-A-58 172 085 discloses a display apparatus comprising sub-matrices of three colour cells in which alternate cells in the horizontal direction are displaced by 1/2 vertical cell pitch, the sub-matrices being energised to give black and white, and colour displays, in alternate fields.

According to the present invention there is provided a liquid crystal display apparatus in which a plurality of first signal lines are provided parallel to one another in the vertical direction, a plurality of second signal lines are provided parallel to one another in the horizontal direction, an input video signal is supplied to picture element electrodes of liquid crystal display cells through selection elements at intersections where said first and second signal lines intersect with one another, said display cells are linearly modulated by said input video signal, and said electrodes are disposed in horizontal lines with alternate said electrodes displaced by 1/2 picture element pitch in said vertical direction; characterized in that:
during one interlaced field, first alternately-disposed horizontally-aligned said electrodes and the intervening said electrodes which are upwardly displaced therefrom by 1/2 picture element pitch form a horizontal line of the display, and during the other interlaced field, said first electrodes and the intervening said electrodes which are downwardly displaced by 1/2 picture element pitch therefrom form a horizontal line of the display.

The invention will now be described by way of example with reference to the accompanying drawings, throughout which like parts are referred to by like references, and in which:
Figure 1 is a diagram of a liquid crystal apparatus according to the present invention;
Figures 2 to 4 are diagrams used to explain the operation thereof;
Figures 5 to 7 are diagrams showing a practical arrangement of an element;
Figure 8 is a diagram for a colour display;
Figures 9 and 10 are diagrams for explanation thereof; and
Figures 11 to 15 are diagrams used to explain a prior apparatus.

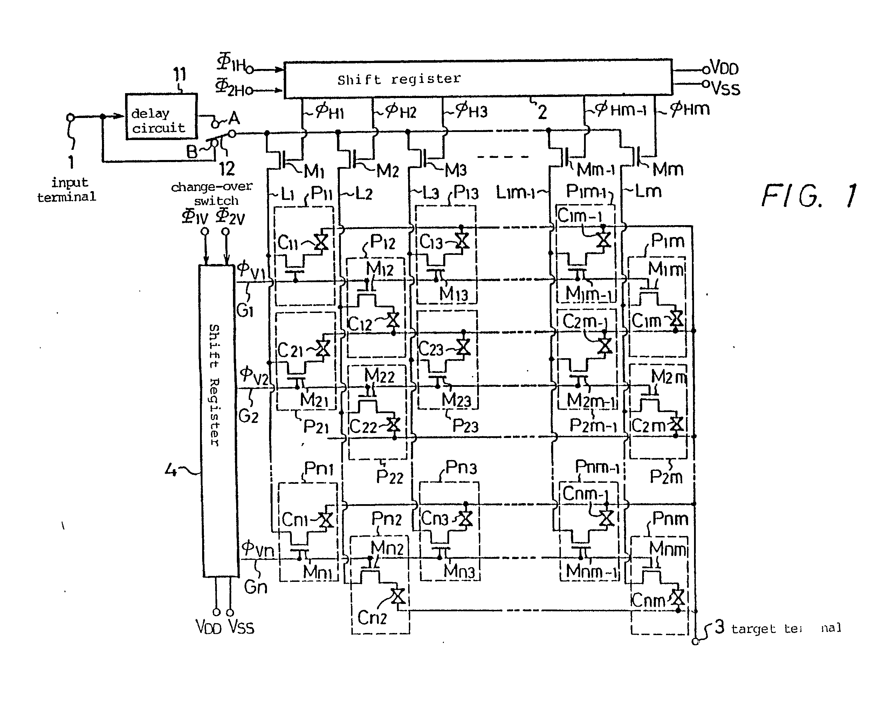

In Figure 1, for example, switching elements $M_{11}$, $M_{12}$, ... $M_{nm}$ are provided with their directions alternating, and respective picture element electrodes $P_{11}$, $P_{12}$, ... $P_{nm}$ are alternately displaced by 1/2 picture element pitch.

A video signal from an input terminal 1 is supplied to a one horizontal period delay circuit 11. The signal from the delay circuit 11 is supplied to one fixed contact A of a change-over switch 12, and the original video signal from the input terminal 1 is supplied to the other fixed contact B. The signal from the change-over switch 12 is supplied to the switching elements $M_1$ to $M_m$.

In this apparatus, during one field of the interlaced signal, the change-over switch 12 engages the fixed contact B, while during the other field, it alternately engages the fixed contacts A and B in response to the clock signals $\varnothing_{1H}$ and $\varnothing_{2H}$.

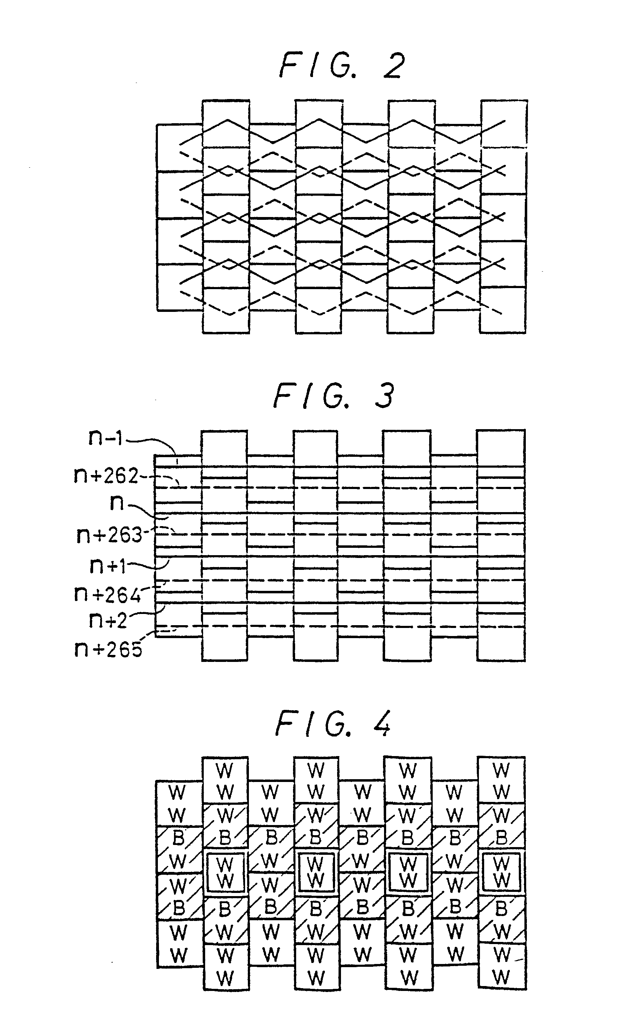

Thus, during one field, the horizontal scanning lines forming the picture are sequentially displayed by the picture element electrodes connected to the same gate line, as, for example, shown by a solid line in Figure 2. On the other hand, during the other field, the switch 12 is changed-over at every one clock period, whereby the signal delayed by one horizontal period in the delay circuit 11 is supplied to the picture element electrodes which are displaced upward relative to the gate line. In other words, the signal which forms the same horizontal scanning line is displayed by the next horizontal scanning line at every other one picture element electrode. Accordingly, during the other field, the horizontal scanning line is displayed at every other one picture element electrode by the downwardly displaced picture element electrode, and thus it is displayed as shown by broken lines in the figure. In this case, the apparent scanning line is located at the averaged position therebetween, so that as shown in Figure 3, the scanning lines of one and another fields are separated and hence the vertical resolution is improved.

In other words, for example, when the aforementioned picture shown in Figure 13A is displayed, scanning lines n - 1, n, n + 1 and n + 2 in one field are displayed as shown by solid lines, while scanning lines n + 262, n + 263, n + 264 and n + 265 of the other field are displayed as shown by broken lines. Thus, the display becomes as shown in Figure 4. In this display, by a picture element electrode located between black (B) lines displayed and shown by a double line, white (W) is displayed during both one and the other fields. When the display of the white (W) is formed between the black lines, the black line is separated to two lines, so the vertical resolution is increased. Thus, since the displacement of 1/2 picture element pitch is provided, the vertical resolution can be increased.

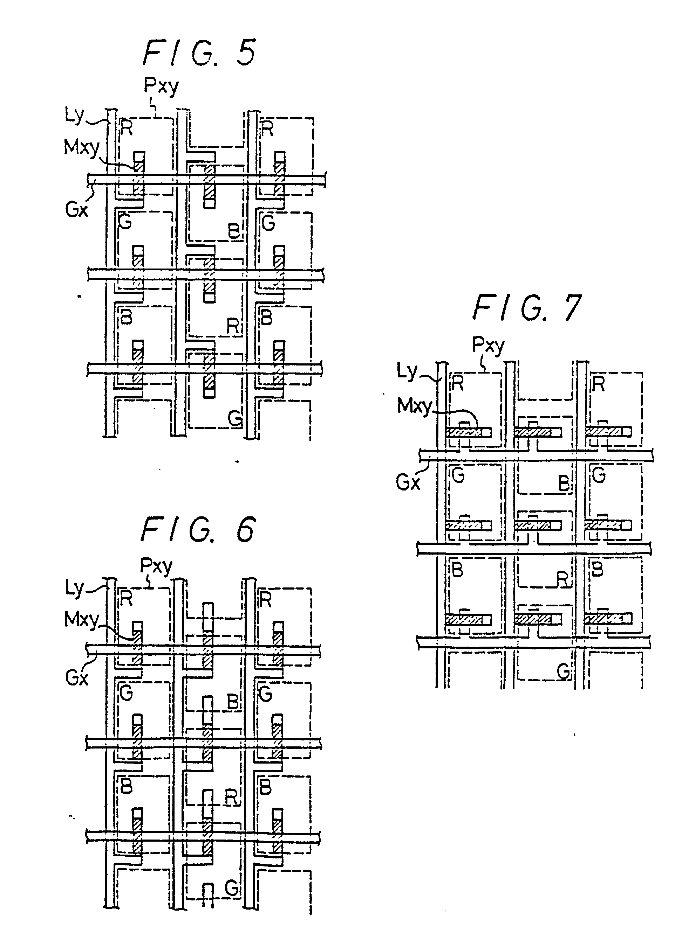

Figure 5 shows a practical arrangement of an element. An elongated portion of a line L is connected to one end of a switching element M shown by hatching, the other end of the element M is connected to a picture element electrode P, and a gate line G is provided at the centre of the element M. As described above, the positions of alternate picture element electrodes $P_{11}$, $P_{12}$, ... $P_{nm}$ are displaced by 1/2 picture element pitch.

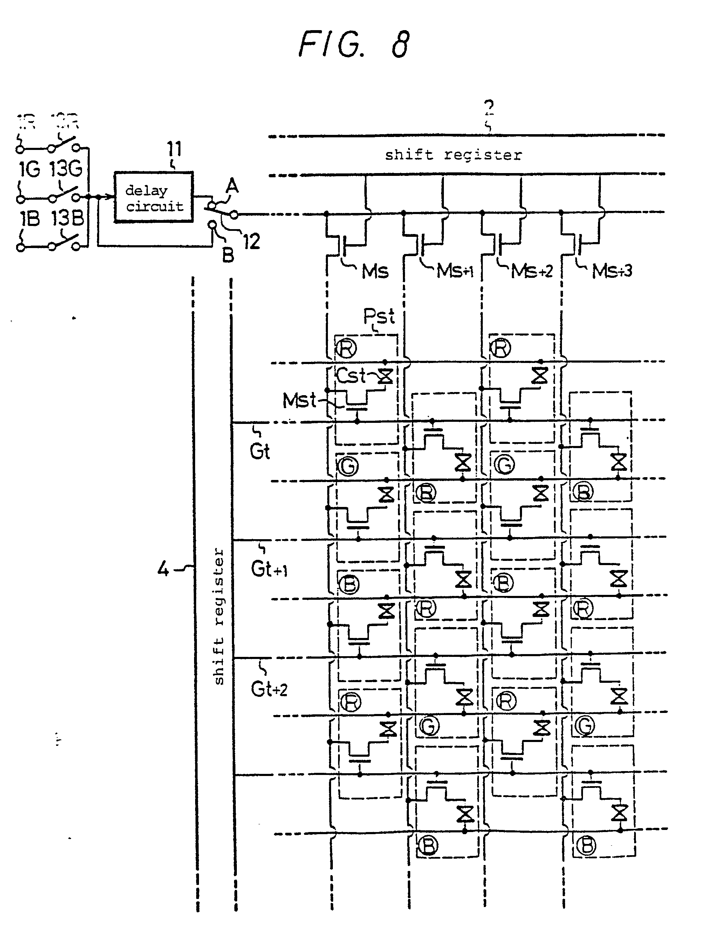

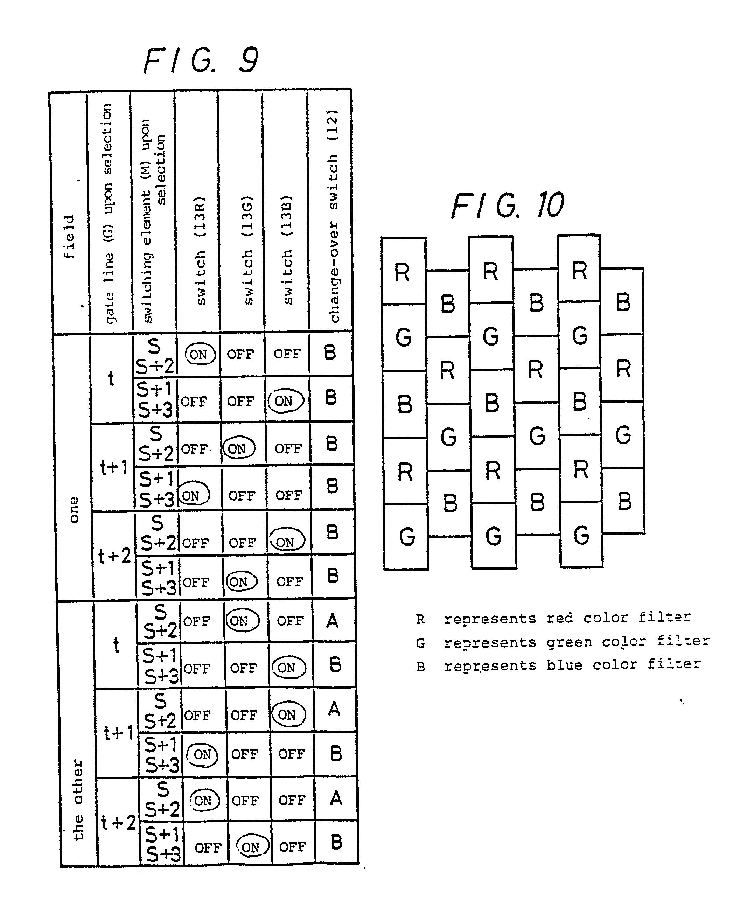

Figures 6 and 7 illustrate other practical examples of location of the element. In these examples, the construction of the switching elements $M_{11}$, $M_{12}$, ... $M_{nm}$ is made the same, but by carefully connecting the switching elements with the respective picture element electrodes $P_{11}$, $P_{12}$, ... $P_{nm}$, the positions of alternate picture element electrodes $P_{11}$, $P_{12}$, ... $P_{nm}$ are displaced from one another by 1/2 picture element pitch.

In addition, Figure 8 shows a case in which colour display is carried out. In that case, red (R), green (G) and blue (B) colour filters are located as shown in the figure. The respective colour signals are applied to input terminals 1R, 1G and 1B. These signals are selected by switches 13R, 13G and 13B and supplied to the delay circuit 11 and to the change-over switch 12.

In this apparatus, as, for example, shown in Figure 9, in one field, during a period in which a gate line $G_t$, for example, is selected, the switches 13R and 13B are alternately turned on for the alternate picture element electrodes; during a period in which the next gate line $G_{t+1}$, for example, is selected, the switches 13G and 13R are alternately turned on; and during a period in which a gate line $G_{t+2}$ is selected, the switches 13B and 13G are alternately turned on, and the change-over switch 12 engages the fixed contact B, whereby the colour signals corresponding to the colour filters are supplied to the respective picture element electrodes. While, in the other field, during the period in which the gate line $G_t$ is selected, the switches 13G and 13B are alternately turned on; during the period in which the gate line $G_{t+1}$ is

selected, the switches 13B and 13R are alternately turned on; and during the period in which the gate line $G_{t+2}$ is selected, the switches 13R and 13G are alternately turned on, and the change-over switch 12 engages the contacts A and B alternately at the clock period, whereby the colour signals corresponding to the colour filters are supplied to the respective picture element electrodes, so that the colour signals corresponding to the colour filters are displayed by the respective picture element electrodes and a colour picture can be displayed.

Accordingly, in this example, the arrangement of the colour filters is as shown in Figure 10. With this arrangement, the horizontal resolution can be improved to be 1/2 in the case of monochrome. Moreover, since the oblique colour line can be avoided, it is possible to obtain an excellent quality picture.

While in both the embodiments the display positions are changed-over by using the horizontal period delay circuit, alternatively, it is possible to switch the display positions by doubling the switching elements $M_{11}$ to $M_{nm}$ of the picture element electrodes that are displaced by 1/2 picture element pitch, and connecting them to the different gate lines $G_1$ to $G_n$.

## Claims

1. A liquid crystal display apparatus in which a plurality of first signal lines (L) are provided parallel to one another in the vertical direction, a plurality of second signal lines (G) are provided parallel to one another in the horizontal direction, an input video signal is supplied to picture element electrodes (P) of liquid crystal display cells (C) through selection elements (M) at intersections where said first and second signal lines (L, G) intersect with one another, said display cells (C) are linearly modulated by said input video signal, and said electrodes (P) are disposed in horizontal lines with alternate said electrodes (P) displaced by 1/2 picture element pitch in said vertical direction; characterized in that:
within one interlaced field first alternately-disposed horizontally-aligned said electrodes (P) and the intervening said electrodes (P) which are upwardly displaced therefrom by 1/2 a picture element pitch form a horizontal line of the display, and within the other interlaced field, said first electrodes (P) and the intervening said electrodes (P) which are downwardly displaced by 1/2 a picture element pitch therefrom form a horizontal line of the display.

## Revendications

Appareil d'affichage à cristaux liquides dans lequel une pluralité de premières lignes de signal (L) sont prévues de manière à être parallèles les unes aux autres suivant la direction verticale, une pluralité de secondes lignes de signal (G) sont prévues de manière à être parallèles les unes aux autres suivant la direction horizontale, un signal vidéo d'entrée est acheminé jusqu'aux électrodes d'éléments d'image (P) des cellules d'affichage à cristaux liquides (C) au travers d'éléments de sélection (M) placés à des intersections où les premières et secondes lignes de signal (L, G) se coupent les unes les autres, ces cellules d'affichage (C) sont modulées de manière linéaire par le signal vidéo d'entrée et les électrodes (P) sont disposées suivant des lignes horizontales avec les électrodes (P) alternées déplacées d'un demi-pas d'élément d'image suivant la direction verticale;

caractérisé en ce que :

à l'intérieur d'une trame entrelacée, des premières électrodes alignées horizontalement et disposées en alternance (P) ainsi que les électrodes qui interviennent (P) et qui sont déplacées vers le haut par rapport à ces dernières d'un demi-pas d'élément d'image forment une ligne horizontale de l'affichage, et à l'intérieur de l'autre trame entrelacée, les premières électrodes (P) et les électrodes qui interviennent (P) et qui sont déplacées vers le bas d'un demi-pas d'élément d'image par rapport à ces dernières forment une ligne horizontale de l'affichage.

## Ansprüche

1. Flüssigkristall-Anzeigevorrichtung, in der
eine Mehrzahl von ersten Signallinien (L) parallel zueinander in vertikaler Richtung und eine Mehrzahl von zweiten Signallinien (G) parallel zueinander in horizontaler Richtung vorgesehen sind,
ein Eingangs-Videosignal zu Bildelement-Elektroden (P) von Flüssigkristall-Anzeigezellen (C) über Selektionselemente (M) zugeführt wird, die an Schnittpunkten liegen, an denen die ersten und zweiten Signallinien (L,G) einander schneiden,
wobei die Anzeigezellen (C) durch das Eingangs-Videosignal linear moduliert werden, und
die Elektroden (P) in horizontalen Zeilen angeordnet sind und jede zweite dieser Elektroden (P) um die Hälfte des Bildelement-Abstands in vertikaler Richtung versetzt ist, dadurch **gekennzeichnet**,
daß innerhalb eines Zeilensprung-Halbbildes erste, abwechselnd angeordnete, horizontal ausgerichtete der Elektroden (P) und die dazwischen angeordneten der Elektroden (P), die gegenüber den ersteren um die Hälfte eines Bildelement-Abstandes nach oben versetzt sind, eine horizontale Anzeige-Zeile bilden, und daß innerhalb des anderen Zeilensprung-Halbbildes die genannten ersten Elektroden (P) und die dazwischen angeordneten der Elektroden (P), die gegenüber den ersteren um die Hälfte eines Bildelement-Abstandes nach unten versetzt sind, eine horizontale Anzeige-Zeile bilden.

FIG. 1

## F I G. 2

## F I G. 3

n−1
n+262
n
n+263
n+1
n+264
n+2
n+265

## F I G. 4

EP 0 194 315 B1

# FIG. 5

# FIG. 6

# FIG. 7

8

# FIG. 8

## F I G. 9

| field | gate line (G) upon selection | switching element (M) upon selection | switch (13R) | switch (13G) | switch (13B) | change-over switch (12) |
|---|---|---|---|---|---|---|
| one | t | S, S+2 | ON | OFF | OFF | B |
| | | S+1, S+3 | OFF | OFF | ON | B |
| | t+1 | S, S+2 | OFF | ON | OFF | B |
| | | S+1, S+3 | ON | OFF | OFF | B |
| | t+2 | S, S+2 | OFF | OFF | ON | B |
| | | S+1, S+3 | OFF | ON | OFF | B |
| the other | t | S, S+2 | OFF | ON | OFF | A |
| | | S+1, S+3 | OFF | OFF | ON | B |
| | t+1 | S, S+2 | OFF | OFF | ON | A |
| | | S+1, S+3 | ON | OFF | OFF | B |
| | t+2 | S, S+2 | ON | OFF | OFF | A |
| | | S+1, S+3 | OFF | ON | OFF | B |

## F I G. 10

R represents red color filter
G represents green color filter
B represents blue color filter

10

# FIG. 11

FIG. 12A

FIG. 12B

FIG. 12C

FIG. 12D

FIG. 12E

amplitude of video signal

target voltage

1 vertical period

FIG. 13A

| | n-1 |
| | n+262 |
| | n |
| | n+263 |
| | n+1 |
| | n+264 |
| | n+2 |
| | n+265 |

FIG. 13B

| W | W | W | W | W | W | W | W |
| W | W | W | W | W | W | W | W |
| B | B | B | B | B | B | B | B |
| W | W | W | W | W | W | W | W |
| W | W | W | W | W | W | W | W |
| B | B | B | B | B | B | B | B |
| W | W | W | W | W | W | W | W |
| W | W | W | W | W | W | W | W |

FIG. 14

| R | G | B | R | G | B |

FIG. 15

| R | B | G | R | B | G |
| G | R | B | G | R | B |
| B | G | R | B | G | R |
| R | B | G | R | B | G |
| G | R | B | G | R | B |